# EUROPÄISCHE PATENTANMELDUNG

(11) **EP 0 987 477 A2**
(43) Veröffentlichungstag der Anmeldung: **22.03.2000**
(21) Anmeldenummer: 99116337.9
(22) Anmeldetag: 19.08.1999
(51) Int. Cl.: F16K 31/04, F16K 31/50

(54) **Ventilantrieb mit Motor und Sicherheitsverstellung**

(30) Priorität: 14.09.1998 DE 29816447 U
(71) Anmelder: SAIA-Burgess GmbH, 01257 Dresden (DE)
(72) Erfinder: Richter, Christian, Dr.-Ing. habil., 01257 Dresden (DE); Scholz, Rudolf, Dipl.-Ing., 01257 Dresden (DE)
(74) Vertreter: Heyner, Klaus, Dr.-Ing.

(57) **Zusammenfassung**

Beschrieben wird ein Ventilantrieb mittels Motor, vorzugsweise Schrittmotor, der eine Sicherheitsverstellung für das Schließen des Ventils bei Spannungsausfall aufweist.

Nach der Konzeption der Erfindung wird als Ventilantrieb vorzugsweise ein Linearmotor mit Rückstellfeder (9) vorgesehen.
Der Linearschrittmotor besitzt einen rotierenden Läufer (3, 4) mit integriertem, axial angeordnetem Spindel-Mutter-System zur Umwandlung der Rotationsbewegung des Läufers in die gewünschte Translationsbewegung für die Verstellung des Ventilkegels (7). Dabei wird die Funktion der Spindel von einer mit dem Ventilkegel (7) gekoppelten Stellstange (5) mit Gewinde und die Funktion der Mutter von einer Nabe mit Innengewinde (4) übernommen.
Die Nabe mit Innengewinde (4) entspricht der als Hohlwelle ausgeführten Achse des Läufers.
Zusätzlich erfolgt die Kopplung des Läufers (3, 4) mit mindestens einer Rückstellfeder (9), die bei Spannungsausfall die erforderliche Bewegung des Läufers bzw. der Stellstange (5) zum Schließen des Ventils gewährleistet. Dazu ist die Feder beispielsweise in Verlängerung der Nabe im vor der Nabe bzw. dem Läufer liegenden Federtopf eingehängt.

## Beschreibung

Die Erfindung bezieht sich auf einen Ventilantrieb mittels Motor, vorzugsweise Schrittmotor, der eine Sicherheitsverstellung für das Schließen des Ventils bei Spannungsausfall aufweist.

Aus dem Stand der Technik sind eine Reihe von Magnetventilen mit rotierendem Antrieb und Rückstellfeder bekannt, die ein selbständiges Schließen bei Spannungsausfall gewährleisten.
Derartige Magnetventile haben mehrere Nachteile, nämlich: es sind nur zwei stabile Arbeitspositionen möglich, offen oder geschlossen. Für eine feinere Stufung der Arbeitswege sind mehrere parallel geschaltete Ventile mit unterschiedlichen Öffnungspositionen notwendig (z.B. vier Ventile ergeben 16 Stufungen). Darüber hinaus muß ein offenes Magnetventil zur Beibehaltung dieser Arbeitsstellung mit dem Nennstrom gespeist werden; die Folgen sind hoher Energieverbrauch, schlechter Wirkungsgrad und unnötig hohe Erwärmung.
Weitere Nachteile von Magnetventilen sind das große Volumen bei Mehrventilanordnung und störende Arbeitsgeräusche, da Magnetventile ungesteuert schlagartig öffnen und schließen.

Das Ventilbestätungsglied nach DE-OS 42 40 688 besitzt eine zusätzliche Schaltkupplung, die notwendig ist zur Trennung vom Motorantrieb und zur Freigabe der Feder für die Rückverstellung. Der Federaufzug muß mit einem Endschalter kontrolliert werden und zusätzlich ist weiterhin eine Bremse erforderlich zum Blockieren der Feder. Diese Lösung ist gekennzeichnet durch einen komplizierten Mechanismus zwischen Motor, Feder und Ausgangswelle.

Gegenstand von DE-GM 69 22 573 ist eine Absperrvorrichtung in Form eines elektrisch steuerbaren Kugelventils. Hier muß zur Rückstellung der Motor mittels Kupplung vom Ventil getrennt werden.
Beide Lösungen lassen nur eine sehr geringe Winkelbewegung der Ausgangswelle zu.

Bei der Kupplung für Motorventile nach DE-GM 70 07 238 wird eine Schlingfeder eingesetzt. Eine solche Schlingfeder kann im Gegensatz zur Triebfeder nicht als Energiespeicher dienen.

Abgeleitet aus dem Stand der Technik ist es Aufgabe der Erfindung Motoren, vorzugsweise Linearschrittmotoren, die zur Ventilverstellung eingesetzt sind, so auszuführen, daß ein selbständiges Schließen des Ventils bei Spannungsausfall mit 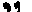 weicher" Stellbewegung und ohne äußere Energiezufuhr erfolgt.

Eine erfindungsgemäße Lösung dieser Aufgabe ist im Patentanspruch 1 angegeben. Weiterbildungen der Erfindung sind in den Unteransprüchen gekennzeichnet.

Nach der Konzeption der Erfindung wird als Ventilantrieb vorzugsweise ein Linearmotor mit Rückstellfeder vorgesehen.
Der Linearschrittmotor besitzt einen rotierenden Läufer mit integriertem, axial angeordnetem Spindel-Mutter-System zur Umwandlung der Rotationsbewegung des Läufers in die gewünschte Translationsbewegung für die Verstellung des Ventilkegels. Dabei wird die Funktion der Spindel von einer mit dem Ventilkegel gekoppelten Stellstange mit Gewinde und die Funktion der Mutter von einer Nabe mit Innengewinde übernommen.
Die Nabe mit Innengewinde entspricht der als Hohlwelle ausgeführten Achse des Läufers.
Zusätzlich erfolgt die Kopplung des Läufers mit mindestens einer Rückstellfeder, die bei Spannungsausfall die erforderliche Bewegung des Läufers bzw. der Stellstange zum Schließen des Ventils gewährleistet. Dazu ist die Feder beispielsweise in Verlängerung der Nabe im vor der Nabe bzw. dem Läufer liegenden Federtopf eingehängt.

Mit dem neuen motorischen Ventilantrieb mit Sicherheitsverstellung sind folgende Vorteile verbunden. Die Linearbewegung wird in Schritten von > 5 µm feinstufig aufgelöst. Über die Geometrie des Ventilkegels und eine feinstufige Verstellbewegung können beliebige Ventilcharakteristiken realisiert werden. Durch Schrittmotoransteuerung sind variable Zeitverläufe der Ventilbewegung möglich. Der digital arbeitende Schrittantrieb kann leicht in übergeordnete Rechnersteuerungen eingebunden werden; er arbeitet als offene Steuerkette, wobei kein Regelkreis mit Rückführung notwendig ist.
Auch bei bis zu 500 Stufungen bzw. Verstellschritten ist nur ein Antrieb erforderlich, d.h. der Ventilantrieb beansprucht nur ein geringes Volumen.
Ein Energieverbrauch für die Ständerwicklungen fällt im wesentlichen nur während der Stellbewegung, also während des Motorbetriebes an; im Haltezustand bei beliebiger Position der Stellstange kommt es zur Absenkung des Energieverbrauchs bei Beaufschlagung der Wicklungen auf unter 10%.
Davon ausgehend ist der Wirkungsgrad des Ventilantriebs sehr hoch, seine Erwärmung nur gering.

Ein weiterer Vorteil ist die geringe Geräuschkulisse des Ventilantriebes, da er eine 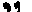 weiche" Stellbewegung ausführt.

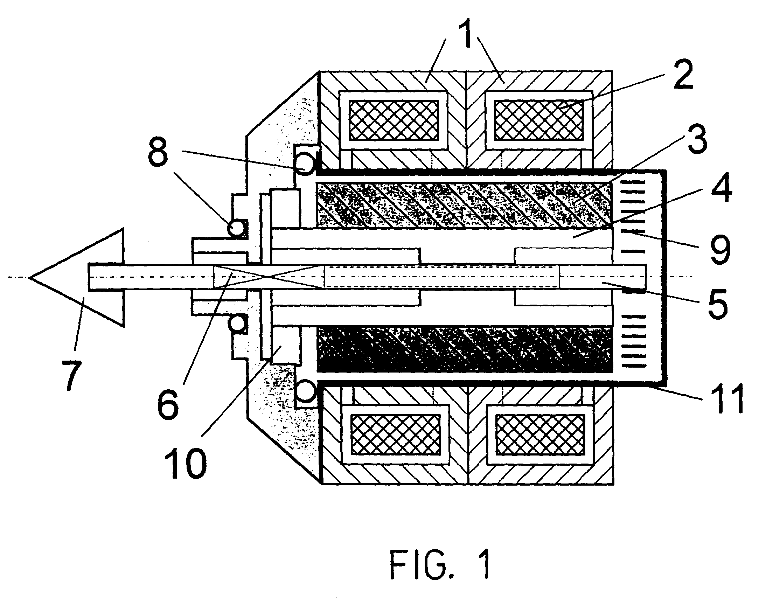

Zur weiteren Erläuterung der Erfindung wird auf die Patentansprüche verwiesen. Einzelheiten, Merkmale und Vorteile der Erfindung ergeben sich auch aus der nachfolgenden Beschreibung eines Ausführungsbeispiels. In der zugehörigen Zeichnung zeigt
Fig. 1 einen Linearschrittmotor für Gasventilantrieb.

Dieser Schrittmotor besitzt eine gasdichte Kapselung des Läufers und verfügt über einen Stellweg von 6 mm. Ein Stellweg von 6 mm bedeutet bei einer Schrittweite von 33 µm, daß der Ventilantrieb 180 Stellpositionen einnehmen kann.

Der Linearschrittmotor besteht aus dem Ständer 1 mit Wicklungen 2.
Der Läufer besitzt eine als Nabe mit Innengewinde 4 ausgebildete Hohlwelle, die einseitig im Lager 10 gehaltert ist, und dem auf der Nabe 4 aufsitzenden Permanentmagneten 3.
Die auf den Ventilkegel 7 arbeitende translatorische Stellbewegung wird von der in der Nahe 4 gleitenden Stellstange mit Gewinde 5 ausgeübt.
Abhängig von der Drehzahl des Läufers 3, 4 und der Steigung der Gewindepaarung Nahe 4, Stellstange 5 wird die Schrittweite und der translatorische Stellweg vorgegeben. Die Drehrichtung des Läufers 3, 4 bestimmt die Bewegungsrichtung des Ventilkegels 7 in Öffnungs- oder Schließposition.
Die Rückstellfeder 9 ist mit dem Läufer 3, 4 gekoppelt. Als Rückstellfeder 9 kann eine Trieb- oder Spiralfeder aber auch eine Druck- oder Zugfeder eingesetzt werden.

Beim Einsatz des Antriebs für Gasventile wird der Läufer gasdicht gekapselt. Dazu sind an den in Fig. 1 gekennzeichneten Stellen bzw. Positionen die Dichtungen 8 und eine Dichthülse 11 angeordnet.
Beim Einsatz als Antrieb für Wasserventile kann der Läufer auch wasserdicht gekapselt werden.
Die Verdrehsicherung 6 kann im Motor oder auch außerhalb des Motors vorgesehen werden.

Nach Abschluß der Stellbewegung wird zur Beaufschlagung der Wicklungen 2 lediglich ein Haltestrom von 20 % des Nennstromes benötigt, das bedeutet eine Energiereduzierung auf 4 %

### Liste der Bezugszeichen

- 1: Ständer
- 2: Wicklung
- 3: Permanentmagnet
- 4: Nabe mit Innengewinde
- 5: Stellstange mit Gewinde
- 6: Verdrehsicherung
- 7: Ventilkegel
- 8: Dichtung
- 9: Rückstellfeder
- 10: Lager
- 11: Dichthülse

## Patentansprüche

1. Ventilantrieb mit Motor und Sicherheitsverstellung
**dadurch gekennzeichnet,** daß zur Ausführung der Sicherheitsverstellung mindestens eine mit dem Läufer (3, 4) gekoppelte Rückstellfeder (9) vorhanden ist.

2. Ventilantrieb mit Motor und Sicherheitsverstellung bestehend aus
einem Schrittmotor mit rotierendem Läufer (3, 4) mit integriertem Spindel-Mutter-System zur Umwandlung der Rotations- in eine Translationsbewegung, wobei als Spindel eine Stellstange (5) mit Außengewinde und als Mutter eine Nabe mit Innengewinde (4) so angeordnet sind, daß die Stellstange (5) mit dem Ventilkegel (7) gekoppelt ist und bei Drehbewegung des Läufers (3, 4) die Stellstange längs der Motorachse in der Nabe (4) gleitet
und einer Rückstellfeder (9), die mit dem Läufer (3, 4) gekoppelt in der Verlängerung der Nabe (4) auf der dem Ventilkegel (7) abgewandten Seite des Schrittmotors angeordnet ist.

3. Ventilantrieb nach Anspruch 1 oder 2,
**dadurch gekennzeichnet,** daß die Rückstellfeder (9) so angeordnet ist, daß je nach Betriebsart der geschlossene Zustand des Ventils der ein- oder ausgefahrene Ventilkegel (7) ist.

4. Ventilantrieb nach einem der Ansprüche 1 bis 3,
**dadurch gekennzeichnet,** daß als Rückstellfeder (9) eine Triebfeder oder eine Spiralfeder vorgesehen ist.

5. Ventilantrieb nach einem der Ansprüche 1 bis 3,
**dadurch gekennzeichnet,** daß als Rückstellfeder (9) eine Druckfeder oder eine Zugfeder vorgesehen ist.

6. Ventilantrieb nach Anspruch 2,
**dadurch gekennzeichnet**, daß mittels Dichtungen (8) und Dichthülse (11) eine gas- bzw. wasserdichte Kapselung des Antriebes gegeben ist.

7. Ventilantrieb nach Anspruch 2,
**dadurch gekennzeichnet,** daß die Verdrehsicherung (6) für den Linearmotor im Motor oder außerhalb des Motors angeordnet ist.

8. Ventilantrieb nach einem der Ansprüche 2, 6 und 7,
**dadurch gekennzeichnet,** daß der Linearmotor interne Endanschläge besitzt, wobei diese Endanschläge als Referenzanschläge benutzbar sind.
